**Europäisches Patentamt**

**European Patent Office**

**Office européen des brevets**

(19)

(11) Numéro de publication: **0 184 486**
**B1**

(12) **FASCICULE DE BREVET EUROPÉEN**

(45) Date de publication du fascicule du brevet:
**10.05.89**

(51) Int. Cl.⁴: **G 01 S 3/48,** G 01 S 3/46

(21) Numéro de dépôt: **85402182.1**

(22) Date de dépôt: **12.11.85**

(54) Procédé de radiogoniométrie interférométrique, et radiogoniomètre pour la mise en oeuvre de ce procédé.

(30) Priorité: **16.11.84 FR 8417563**

(43) Date de publication de la demande:
**11.06.86 Bulletin 86/24**

(45) Mention de la délivrance du brevet:
**10.05.89 Bulletin 89/19**

(84) Etats contractants désignés:
**DE GB IT**

(56) Documents cité:
**US-A-3 806 937**
**US-A-3 872 477**
**US-A-3 942 177**
**US-A-4 220 954**

(73) Titulaire: **THOMSON- CSF, 173, Boulevard Haussmann, F-75379 Paris Cédex 08 (FR)**

(72) Inventeur: **Multedo, Gilbert, THOMSON- CSF SCPI 173, bld Haussmann, F-75379 Paris Cedex 08 (FR)**

(74) Mandataire: **Turlèque, Clotilde, THOMSON- CSF SCPI, F-92045 PARIS LA DEFENSE CEDEX 67 (FR)**

EP 0 184 486 B1

LIBER, STOCKHOLM 1989

## Description

L'invention se rapporte à un procédé de radiogoniométrie pour mesurer la direction d'un poste radioélectrique émetteur, et à un radiogoniomètre pour la mise en oeuvre de ce procédé.

De nombreux procédés de radiogoniométrie sont connus, parmi lesquels les procédés dits par interférométrie dans lesquels la mesure de l'écart de phase $\Delta\varphi = \frac{2\pi d}{\lambda} \sin\alpha$ de l'émission de longueur d'onde $\lambda$. reçue sur deux antennes distantes de d, avec un angle d'arrivée $\alpha$ par rapport à la normale à la base interférométrique formée des deux antennes, donne une mesure de la direction de l'emetteur. Cette mesure de déphasage est obtenue par un traitement des signaux à fréquence intermédiaire issus de deux récepteurs, appairés en phase, placés à la sortie des antennes. Plusieurs procédés peuvent être utilisés pour la mesure de cet écart de phase parmi lesquels une discrimination de phase numérique, une transformation de Fourier sur une porteuse à fréquence intermédiaire dans une large bande de fréquences, ou un traitement par somme et différence des deux signaux à fréquence intermédiaire issus des deux récepteurs. L'inconvénient de ce type de procédé résulte de l'exigence de deux voies de réception parfaitement appairées en phase et en gain, pour obtenir une mesure précise.

Dans un autre domaine, celui des radars, il existe également un procédé détourné d'interférométrie qui consiste à mesurer non pas l'écart de phase $\Delta\varphi$ entre deux émissions reçues simultanément, mais l'écart de temps d'arrivée $\tau = \frac{d}{c} \sin\alpha$, du même signal sur les deux antennes. Pour cela des lignes à retard variables placées en sortie des antennes sont asservies pour placer les signaux issus des antennes en coïncidence temporelle à leurs sorties. Le signal d'erreur utilisé pour cet asservissement peut être obtenu de différentes manières, par exemple par détection de la modulation d'amplitude d'un signal, traité dans un récepteur, résultant de la combinaison des signaux issus des antennes dans un coupleur hybride à quadrature, et de la commutation à un rythme fixe des sorties du coupleur.

Un tel dispositif ne permettrait pas d'obtenir une mesure précise de la direction d'un poste émetteur car le signal d'erreur ne dépend pas seulement de l'écart de temps d'arrivée mais dépend également du gain du récepteur dont les fluctuations dépendent de la commande automatique de gain, et de l'amplitude propre du signal reçu qui peut aussi être affectée par des variations dues au trajet de propagation.

L'invention a pour objet un procédé de radiogoniométrie interférométrique qui ne présente pas ces inconvénients et qui, en particulier, conduit à des mesures d'angles précises, indépendantes de réglages de phase et/ou de gain à la réception, et également indépendantes de la modulation du signal reçu et des variations d'amplitude qui peuvent l'affecter sur son trajet de propagation.

Selon l'invention, un procédé de radiogoniométrie interférométrique consistant à recevoir, sur les antennes d'un réseau, l'émission radioélectrique dont la direction doit être mesurée, à combiner les signaux issus de deux des antennes du réseau distantes de d et formant une base interférométrique pour une phase de la mesure de direction dans un coupleur hybride à quadrature, et à relier alternativement les sorties du coupleur à l'entrée d'une première voie de réception durant les deux demi-périodes de périodes successives de commutation, pour créer un premier signal modulé en amplitude dont l'indice de modulation est fonction de la direction de l'émission radioélectrique, est caractérisé en ce que, pour obtenir une mesure de direction indépendante des paramètres de réglage de la première voie de réception et du signal reçu lui-même, une seconde voie de réception est reliée alternativement à la sortie du coupleur non reliée à la première voie de réception pour créer un second signal modulé en amplitude, et en ce qu'une valeur d'erreur G fonction du déphasage $\Delta\varphi = \frac{2\pi d}{\lambda} \sin\alpha$, où $\lambda$ est la longueur d'onde d'émission et $\alpha$ l'angle d'émission repéré par rapport à la normale à la base, est calculée à chaque période de commutation à partir des valeurs d'énergie mesurées durant chaque demi-période dans chacune des voies de réception.

L'invention a également pour objet un radiogoniomètre pour la mise en oeuvre de ce procédé qui comporte à cette fin un deuxième récepteur, les entrées des deux récepteurs étant alternativement reliées aux deux sorties du coupleur hybride à quadrature.

Selon l'invention, un radiogoniomètre pour la mise en oeuvre du procédé défini ci-dessus, comportant un réseau d'antennes et un commutateur de sélection d'antennes, connecté par ses entrées à deux antennes parmi les antennes du réseau pour former une base de mesure interférométrique, et dont les sorties sont couplées aux entrées d'un coupleur hybride à quadrature, est caractérisé en ce que les sorties du coupleur sont respectivement commutées en alternance à un rythme fixe aux entrées d'un premier et d'un second récepteurs par l'intermédiaire d'un commutateur, les sorties des récepteurs étant reliées à un circuit de mesure et de gestion qui fournit, à partir des signaux issus des récepteurs modulés en amplitude par la commutation alternative de leurs entrées respectives aux deux sorties du coupleur hybride, une mesure de la direction d'émission détectée.

L'invention sera mieux comprise et d'autres caractéristiques apparaîtront à l'aide de la description qui suit en référence aux figures annexées.

- La figure 1 est un schéma synoptique du radiogoniomètre interférométrique selon l'invention.
- Les figures 2 et 3 montrent les variations de valeurs d'erreurs, respectivement G et G' utilisables dans le procédé suivant l'invention, en fonction d'un paramètre $\Psi$ qui suit les variations de la direction d'arrivee de l'émission radio à detecter.
- La figure 4 illustre une stratégie de convergence pour la valeur d'erreur G.
- La figure 5 est un schéma explicatif relatif à un exemple de réseau d'antennes utilisable dans le radiogoniomètre suivant l'invention.
- La figure 6 est un schéma synoptique du circuit de gestion 20 de la figure 1.

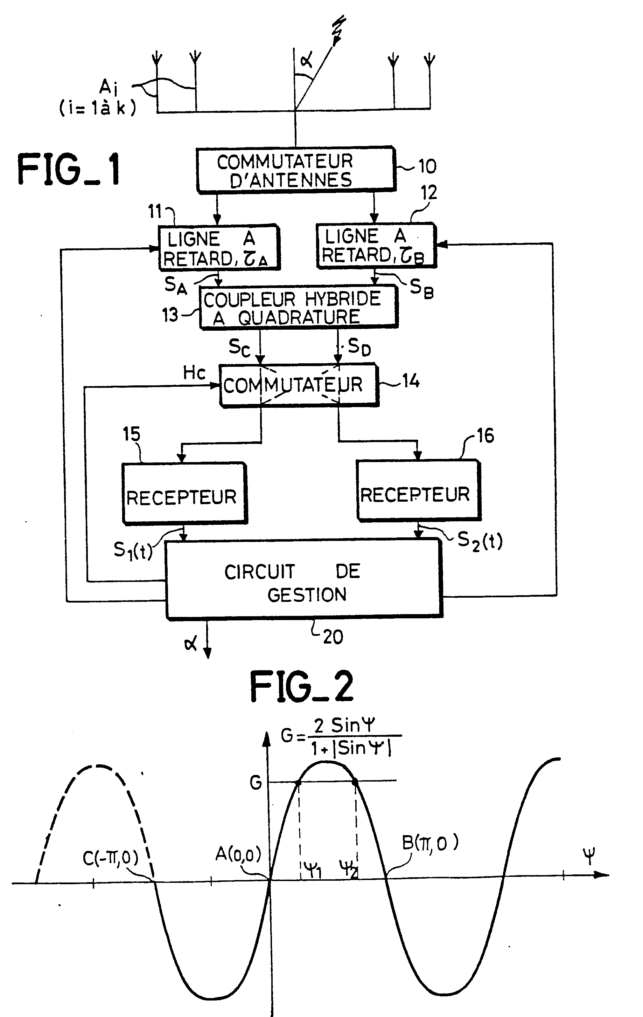

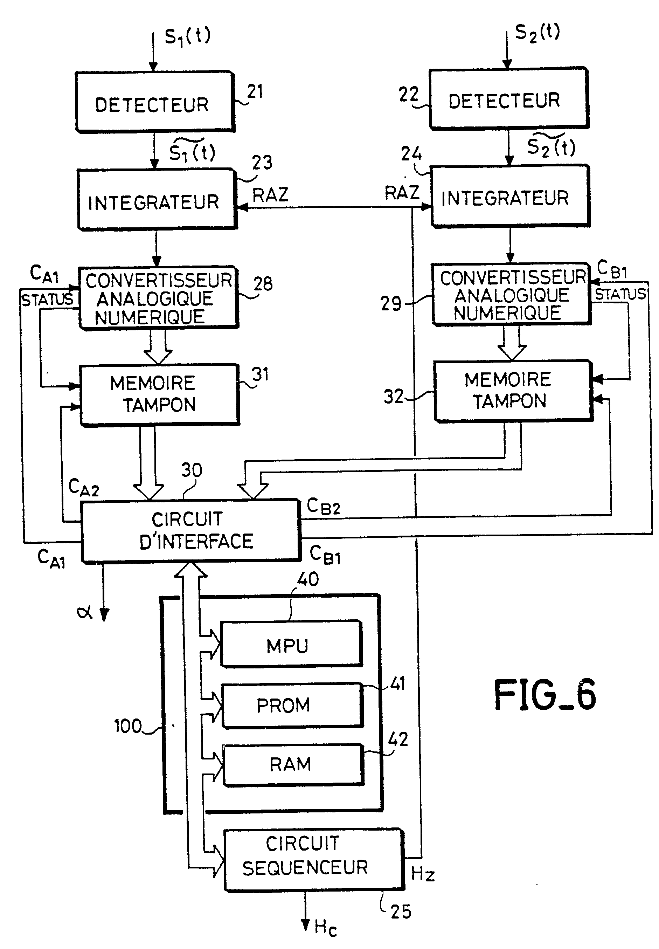

Sur la figure 1, k antennes $A_i$, i = 1 à k, judicieusement réparties, forment un réseau utilisable en interférométrie. Pour cela un commutateur d'antennes 10 relie à chaque instant les entrées de deux voies de réception à deux des antennes du réseau formant à cet instant la base interférométrique. Par exemple, ce réseau d'antennes peut être constitué de quatre antennes disposées suivant un carré dans les directions Est: E, Ouest: W, Nord: N, et Sud: S par rapport à un centre 0, comme représenté sur la figure 5 en vue de dessus. Deux bases interférométriques Est-Ouest et Sud-Nord sont par exemple alternativement utilisées comme il sera expliqué ci-après. Les deux voies de réception comportent chacune une ligne à retard respectivement 11 et 12, de retards ajustables $\tau_A$ et $\tau_B$, dont les sorties $S_A$ et $S_B$ sont respectivement reliées aux entrées d'un coupleur hybride à quadrature 13. Les sorties de ce coupleur $S_C$ et $S_D$ sont reliées aux entrées d'un commutateur 14 dont les sorties sont reliées aux entrées de deux récepteurs respectivement 15 et 16. Les sorties de ces récepteurs sont reliées aux entrées d'un circuit de gestion et de mesure 20, qui commande d'une part l'ajustement des retards $\tau_A$ et $\tau_B$ introduits par les lignes à retard 11 et 12, d'autre part la commutation des sorties du coupleur hybride 13 aux entrées des récepteurs 15 et 16 par commande du commutateur 14, et enfin la commutation des sorties du réseau d'antennes par commande du commutateur d'antennes 10. Ce circuit de gestion 20 fournit une mesure de l'angle d'arrivée $\alpha$ de l'émission radioélectrique détectée.
Ce système de radiogoniométrie interférométrique fonctionne de la manière suivante.
Pour simplifier, on considère d'abord un réseau d'antennes constitué seulement de deux antennes $A_1$ et $A_2$ formant une base interférométrique, $A_1$ et $A_2$ étant distantes de d. L'angle d'arrivée de l'émission radioélectrique $\alpha$ est mesure par rapport à la normale à cette base $A_1 A_2$. Le commutateur d'antennes relie en permanence l'antenne $A_1$ à l'entrée de la ligne à retard 11 de retard $\tau_A$ et l'antenne $A_2$ à l'entrée de la ligne à retard 12, de retard $\tau_B$.
Le signal à la sortie $S_A$ de la ligne à retard 11, $S_A(t)$ peut être écrit de la manière suivante:

$$S_A(t) = S(t)\, e^{j(\omega_o t + \varphi(t) + \omega_o \tau_A)}$$

où $S(t)$ et $\varphi(t)$ sont respectivement l'amplitude et la phase propre du signal radioélectrique reçu, $\omega_o$ la pulsation de sa porteuse.
De même le signal à la sortie $S_B$ de la ligne à retard 12 est $S_B(t)$:

$$S_B(t) = S(t)\, e^{j(\omega_o t + \varphi(t) + \omega_o \tau_B + \Delta\varphi)}$$

où $\Delta\varphi$ est l'écart de phase entre les deux antennes.
$\Delta\varphi = \frac{2\pi d}{\lambda} \sin\alpha$, pour une émission ayant un angle de site nul.
Le calcul montre que le module du signal $S_C(t) = S_A(t) + j\, S_B(t)$ à l'une des sorties du coupleur hybride 13 est:

$$|S_C(t)| = S(t)\, \sqrt{1 - \sin\psi}, \text{ où } \psi = \Delta\varphi - \omega_o\,(\tau_A - \tau_B)$$

De même, le module du signal $S_D(t) = S_B(t) + j\, S_A(t)$ à l'autre sortie du coupleur est:

$$|S_D(t)| = S(t)\, \sqrt{1 + \sin\psi}.$$

Les sorties du coupleur hybride à quadrature sont alternativement reliées aux entrées des premier et second récepteurs 15 et 16 à un rythme fixe T. Ainsi pendant une demi période $\frac{T}{2}$, le premier récepteur 15 reçoit le signal $S_C(t)$ tandis que l'autre reçoit le signal $S_D(t)$ et inversement pendant la demi période suivante. Si $k_1(t)$ est le gain du premier récepteur, 15, et si $k_2(t)$ est le gain du second récepteur, 16, les énergies $E_1$ et $E_2$ reçues par ces récepteurs pendant la première demi période sont respectivement:

$$\begin{cases} E_1 = \displaystyle\int_0^{\frac{T}{2}} k_1(t)\, S(t)\, \sqrt{1 - \sin\psi}\; dt \\[4mm] E_2 = \displaystyle\int_0^{\frac{T}{2}} k_2(t)\, S(t)\, \sqrt{1 + \sin\psi}\; dt \end{cases}$$

et pendant la seconde demi période, elles sont respectivement:

3

$$\begin{cases} E'_1 = \int_{\frac{T}{2}}^{T} k_1(t)\, S(t)\, \sqrt{1 + \sin \psi}\; dt \\[2em] E'_2 = \int_{\frac{T}{2}}^{T} k_2(t)\, S(t)\, \sqrt{1 - \sin \psi}\; dt. \end{cases}$$

Si les gains des récepteurs sont constants sur une période de commutation, c'est-à-dire si le temps de resensibilisation $T_r$ de la commande automatique de gain des récepteurs est très supérieur à la période de commutation $T$, $k_1(t)$ et $k_2(t)$ peuvent être considérés comme constants sur une période de commutation.

Ces quatre valeurs d'énergie sont donc mesurées puis combinées d'une manière particulière pour obtenir une valeur d'erreur, de façon que la mesure résultant de la combinaison ne dépende ni des gains des récepteurs et de leurs constantes de commande automatique de gain, ni de la modulation d'amplitude propre du signal reçu.

Une manière de combiner ces quatre valeurs pour s'affranchir de ces paramètres est la suivante:

$$F = \frac{E_2}{E_1} \times \frac{E'_1}{E'_2} = \frac{1 + \sin \psi}{1 - \sin \psi}$$

Une tension d'erreur proportionnelle à F - 1 s'annule et change de signe pour $\psi = 0$. Cependant les variations de part et d'autre de $\psi = 0$ ne sont pas symétriques.

Une autre combinaison est donc préférable dans laquelle les variations sont symétriques pour $\psi$ positif et $\psi$ négatif. Cette valeur d'erreur peut être:

$$G = \frac{E'_1 E_2 - E_1 E'_2}{MAX\,(E'_1 E_2,\, E_1 E'_2)} = \frac{2 \sin \psi}{1 + |\sin \psi|}$$

ou

$$G = \frac{E'_1 E_2 - E_1 E'_2}{MIN\,(E'_1 E_2,\, E_1 E'_2)} = \frac{2 \sin \psi}{1 - |\sin \psi|}$$

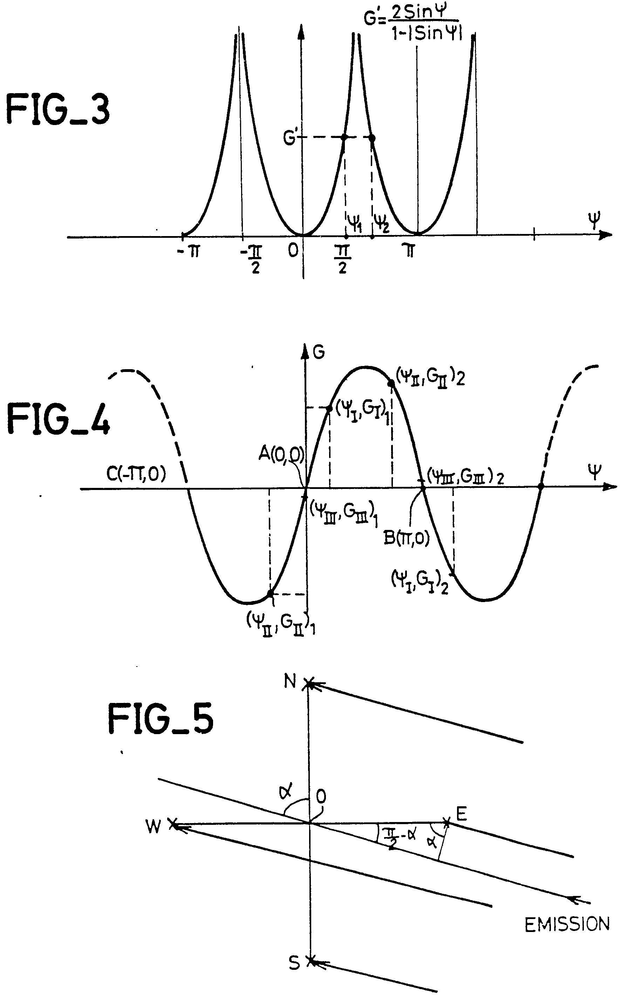

Une valeur d'erreur proportionnelle à G ou à G' s'annule pour $\psi = 0$ et varie symétriquement de part et d'autre de $\psi = 0$. De plus, elle ne dépend que de $\psi$. Les variations de G et de G' en fonction de $\psi$ sont représentées respectivement sur les figures 2 et 3.

L'asservissement des lignes à retard permet en faisant varier $\tau_A$ et $\tau_B$ de ramener $\psi$ à la valeur 0 au moyen d'une telle valeur d'erreur.

Cependant il existe une ambiguïté car à une valeur d'erreur G, par exemple, correspondent deux valeurs de $\psi$, $\psi_1$ et $\psi_2$ dans un intervalle de $2\pi$, ce qui conduit à deux points de convergence possibles pour annuler G: A ($\psi = 0$, G = 0) et B ($\psi = \pi$, G = 0).

Pour éviter cette ambiguïté, un premier moyen consiste à imposer le sens de variation de $\psi$ en fonction du signe de G, par exemple, si G est positif on diminue toujours $\psi$ en introduisant des décalages tels que $\omega_0\,(\tau_A - \tau_B)$ soit toujours positif et si G est négatif, on augmente toujours $\psi$ en introduisant des décalages tels que $\omega_0\,(\tau_A - \tau_B)$ soit toujours négatif. Ainsi le point de convergence sera toujours A ($\psi = 0$, G = 0) quelle que soit la valeur $\psi$ de départ. (On peut choisir inversement d'augmenter $\psi$ pour G > 0 et de le diminuer pour G < 0; le point de convergence sera alors toujours B ($\psi = \pi$, G = 0) ou C ($\psi = \pi$, G = 0) ce qui revient au même.

Cette stratégie d'asservissement peut se révéler assez longue, en particulier pour des points de départ ($\psi$, G) proches de B ($\psi = \pi$, G = 0) ou C ($\psi = -\pi$, G = 0) avec le premier choix, ou proches de A ($\psi = 0$, G = 0) avec le second choix; la variation de phase $|\Delta\varphi = \omega_0(\tau_A - \tau_B)$ peut en effet atteindre $\pi$.

En conséquence, dans le meilleur mode de réalisation de l'invention, une stratégie d'asservissement plus rapide permettant de limiter la variation de phase $\Delta\varphi$ induite par variation des retards à une valeur inférieure à $\frac{\pi}{2}$, $|\Delta\varphi| = \omega_0\,(\tau_A - \tau_B) < \frac{\pi}{2}$ est mise en oeuvre. Elle consiste à introduire un déphasage de $\psi$ égal à $\frac{\pi}{2}$ par l'intermédiaire des lignes à retard.

Ainsi, si à la fin d'une première période de commutation la valeur d'erreur calculée est $G_I$ associée à une phase $\psi_I$, la valeur d'erreur calculée lors de la période suivante pour $\psi_\pi = \psi_I - \frac{\pi}{2}$ sera

$$G_{II} = \frac{2 \sin \psi_{II}}{1 + |\sin \psi_{II}|} = \frac{-2 \cos \psi_I}{1 + |\cos \psi_I|}$$

Une valeur de $\psi_1$ est alors donnée directement par

$$\psi_I = \text{Arctg}\, \frac{G_I\,(2 - |G_{II}|)}{G_{II}\,(2 - |G_I|)} + \varepsilon\,\pi \quad \text{avec}$$
$\varepsilon = 0$ si $G_{II} < 0$
$\varepsilon = +1$ si $G_{II} > 0$, $G_I > 0$
$\varepsilon = -1$ si $G_{II} > 0$, $G_I < 0$

Il existe une indétermination sur la valeur de $\psi_I$ qui peut être levée par la connaissance du signe de $G_I$, et donc de $\sin \psi_I$ et par celle de $G_{II}$, inverse du signe de $\cos \psi_I$. Les deux valeurs d'erreurs $G_I$ et $G_{II}$, calculées à partir des énergies dans deux périodes de commutation successives entre lesquelles est introduit un

4

déphasage supplémentaire de $\frac{\pi}{2}$ au moyen des lignes à retard permettent d'obtenir une valeur de $\psi$ sans ambiguité. Il ne serait donc normalement pas nécessaire de mettre en oeuvre une stratégie de convergence qui en annulant progressivement $\psi$ donnerait la valeur de l'écart de phase $\Delta\varphi$ fonction de l'angle d'arrivée par mesure des retards introduits: $\Delta\varphi = \omega_o (\tau_A - \tau_B)$.

En fait, dans le meilleur mode de realisation de l'invention, une telle stratégie est mise en oeuvre car la détermination des valeurs d'erreurs n'est pis toujours exacte et est d'autant plus entachée d'erreur que les énergies mesurées sont grandes. L'imprécision de cette détermination est due à la commande automatique des gains des récepteurs dont le temps de resensibilisation n'est pas toujours très supérieur à la période de commutation T, et le gain du récepteur $k_1(t)$ ou $k_2(t)$ n'est donc pas toujours maintenu constant pendant la période de commutation. La distorsion introduite sur la mesure est d'autant plus grande que la modulation introduite à l'entrée de chaque récepteur du fait de la commutation est grande et que les états des récepteurs à l'instant initial sont très différents. C'est le cas lorsque $\psi$ est égal à $\pm \frac{\pi}{2}$, les variations de gains $k_1(t)$ et $k_2(t)$ étant alors différentes, et des problèmes de saturation peuvent alors affecter le signal.

Dans ce cas en effet, un des deux récepteurs voit à l'instant initial un signal normalement voisin de 0, $S_C(t) = 0$ et est positionné par sa CAG au gain maximum alors que l'autre récepteur régule sur l'énergie moyenne du signal. Pendant la demi-période suivante, le premier récepteur va saturer et l'évaluation de la valeur d'erreur et donc de $\psi$ est manifestement faussée.

La strategie de convergence permet, par commande des lignes à retard variables 11 et 12 de ramener $\psi$ à la valeur 0, $\pi$ ou $-\pi$. En effet au voisinage de ces valeurs, les récepteurs sont dans des états pour lesquels on peut considérer que les gains des récepteurs ont des valeurs constantes et les signaux varient peu et ne peuvent conduire à la saturation.

Les étapes de la stratégie de convergence mise en oeuvre sont les suivantes:

- $1^{\text{ère}}$ période de commutation: mesure de $(E_1, E_2, E'_1, E'_2)_I$ et calcul de $G_I = \frac{2 \sin \psi_I}{1 + \sin \psi_I}$
- $2^{\text{ème}}$ période de commutation: décalage de phase de $\frac{\pi}{2}$ par commande des retards des lignes 11 et 12: $\psi_{II} = \psi_I - \frac{\pi}{2}$; mesure de $(E_1, E_2, E'_1, E'_2)_{II}$ et calcul de $G_{II} = \frac{-2 \cos \psi_I}{1 + |\cos \psi_I|}$
- $3^{\text{ème}}$ période de commutation: annulation du décalage de $\frac{\pi}{2}$ et introduction d'un décalage égal à $-$ Arctg $\frac{G_I (2 - |G_{II}|)}{G_{II} (2 - |G_I|)}$, c'est-à-dire égal à la valeur $\psi_I$ calculée à partir des deux valeurs d'erreurs successives $G_I$ et $G_{II}$; la phase est alors $\psi_{III}$.

Ces trois périodes ont pour effet de se positionner sur la courbe G en fonction de $\psi$ au voisinage du point $A(0,0=$ si $\psi \in [-\frac{\pi}{2}; + \frac{\pi}{2}]$, ou au voisinage du point $B(\pi, 0)$ (ou $C(-\pi, 0)$) si $\psi \in [-\pi; -\frac{\pi}{2}] [\frac{\pi}{2}, \pi]$. Cette phase est schématisée sur la courbe de la figure 4 pour deux valeurs de départ respectivement $(\psi_I)_1$ et $(\psi_I)_2$ dans ces deux intervalles.

Dès la fin de cette phase, $G_{III} \to 0$

- La phase suivante introduit des décalages de phase de telle façon que à la $n^{\text{ième}}$ période de commutation

$$\psi_n = \psi_{n-1} - \varepsilon \cdot \text{Arcsin} \left( \frac{G_n}{2 - |G_n|} \cdot \frac{1}{k_n} \right);$$

avec
$$\begin{cases} \varepsilon = 1 \text{ pour } G_{II} > 0 \\ \varepsilon = -1 \text{ pour } G_{II} < 0 \end{cases}$$

Or dès la fin de la première phase $G_{III} \to 0$ et

$$\psi_n = \psi_{n-1} - \varepsilon \left( \frac{G_n}{2 - |G_n|} \cdot \frac{1}{k_n} \right)$$

Le calcul montre que la stratégie optimale de convergence en présence de bruit sur les valeurs d'erreurs calculées est une loi en gradient telle que $k_n = n$ qui permet d'obtenir une position d'équilibre dans des conditions de bruit défavorable. Cette position d'equilibre, obtenue à la $n^{\text{ième}}$ période de commutation, fournit la valeur $\Delta\varphi = 2\pi \frac{d}{\lambda} \sin \alpha$ à partir du calcul suivant:

$$\text{pour } G_{II} < 0 : \Delta\varphi = -\text{Arctg} \left( \frac{G_I}{G_{II}} \frac{2 - |G_{II}|}{2 - |G_I|} + \sum_{i=1}^{n} \varepsilon \text{ Arc sin } \frac{G_n}{2 - |G_n|} \cdot \frac{1}{k_n} \right.$$

$$\text{pour } G_{II} > 0 : \Delta\varphi = -\text{Arctg} \left( \frac{G_I}{G_{II}} \frac{2 - |G_{II}|}{2 - |G_I|} + \sum_{i=1}^{n} \varepsilon \text{ Arc sin } \frac{G_n}{2 - |G_n|} \cdot \frac{1}{k_n} \right) \pm \pi$$

suivant le signe de $\psi_I$.

Lorsqu'une première valeur de $\Delta\varphi$ a ainsi été calculée à l'issue d'une première phase de mesure utilisant une

EP 0 184 486 B1

base interférométrique formée de deux des antennes du réseau, une commutation d'antennes peut être realisée et une deuxième phase de mesure peut commencer, cette deuxième phase mettant en oeuvre le même procédé de mesure en utilisant une autre base interférométrique.

A titre d'exemple la figure 5 montre un réseau d'antennes en vue de dessus, constitué de 4 antennes disposées suivant un carré et correspondant par rapport au centre 0 du carré aux directions E = est, W = ouest, S = sud et N = nord.

Si $\alpha$ est l'angle d'arrivée de l'émission radioélectrique mesurée par rapport à la base est-ouest:

$$\begin{cases} \Delta\varphi_{EW} = \frac{2\pi d}{\lambda} \sin \alpha \\ \\ \Delta\varphi_{NS} = \frac{2\pi d}{\lambda} \cos \alpha. \end{cases}$$

La valeur de l'angle d'arrivée $\alpha$ est déduite de ces deux phases de mesure de la façon suivante:

$$\alpha = \text{Arctg} \frac{\Delta\varphi_{EW}}{\Delta\varphi_{NS}}$$

ou encore, en utilisant deux bases à 45°, et non plus orthogonales:

$$\Delta\varphi_{EW} = \frac{2\pi d}{\lambda} \sin \alpha$$

$$\Delta\varphi_{NE} = \frac{2\pi d}{\lambda\sqrt{2}} \sin \left(\alpha - \frac{\pi}{4}\right)$$

$$\text{soit } \alpha = \text{Arctg} \frac{1}{1 - 2\frac{\Delta\varphi_{NE}}{\Delta\varphi_{EW}}}$$

Ces mesures sont sans ambiguité si $\frac{d}{\lambda} < \frac{1}{2}$ dans le premier cas ou si $\frac{d}{\lambda\sqrt{2}} < \frac{1}{2}$ dans le second cas.

Le circuit de gestion 20 de la figure 1 comporte un microprocesseur qui effectue la suite des calculs et des mesures en suivant les phases du procédé de radiogoniométrie précisées ci-dessus.

Un schéma synoptique de ce circuit des gestion est représenté sur la figure 6. Il comporte un microprocesseur 100 avec son unité de traitement 40, une mémoire de programme PROM, 41, et une mémoire RAM, 42; ce microprocesseur est associé à des circuits d'acquisition via un circuit d'interface type PIA, 30 relié au microprocesseur par bus 110, et un circuit séquenceur 25 qui par un séquencement programmé permet l'acquisition des énergies.

Pour cela, les signaux à fréquence intermédiaire régulés $S_1(t)$, $S_2(t)$ en sortie des recepteurs 15 et 16 sont reçus sur deux détecteurs d'enveloppe 21 et 22. Les mesures des énergies $E_1$ (resp $E'_1$) et $E_2$ (resp E') se font après intégration dans deux intégrateurs 23 et 24 des enveloppes $\check{S}_1(t)$ et $\check{S}_2(t)$ des signaux $S_1(t)$ et $S_2(t)$. La durée d'intégration est déterminée par le circuit séquenceur, 25, qui fournit un signal de commande $H_z$ effectuant la remise à zéro RAZ simultanée des intégrateurs 23, 24.

Les signaux caractéristiques des valeurs d'énergie sont échantillonneés et les valeurs numériques correspondantes sont données par les sorties de deux convertisseurs analogiques-numériques 28, 29 commandés par des signaux de commande d'échantillonnage $HE_1$, $HE_2$ générés sur les sorties $CA_1$ et $CB_1$ du circuit d'interface 30 de type PIA. Les sorties des convertisseurs sont reliées à des mémoires tampon 31 et 32 dans lesquelles les valeurs numériques des énergies sont mémorisées sur le front montant des signaux status des convertisseurs 28 et 29.

Les signaux de mise à zéro des mémoires tampons 31 et 32 sont générés sur les sorties $CA_2$ et $CB_2$ du circuit d'interface, 30, par le circuit APU 40, et sont suivis de la mise à zéro sur la sortie $H_z$ du séquenceur 25 des intégrateurs 23 et 24.

La sortie $H_c$ du sequenceur 25 commande la commutation des sorties du coupleur hybride 13 par le commutateur 14 (figure 1). Les signaux $H_{E1}$ et $H_{E2}$ sont synchrones et permettent l'acquisition sur la première période de $H_c$ de $E_1$ et $E_2$ et sur la deuxième demi-période de $E'_1$ et $E'_2$.

La mesure de l'angle d'arrivée $\alpha$ est effectuée à partir des mesures d'énergie, dans l'unité de traitement 40 et disponible sur une sortie du circuit d'interface 30.

L'invention n'est pas limitée au procédé ainsi décrit, en particulier pour ce qui concerne les stratégies d'asservissement qui doivent être adaptées aux variations de la valeur d'erreur choisie.

**Revendications**

1. Procédé de radiogoniométrie interférométrique consistant à recevoir, sur les antennes d'un réseau, l'émission radioélectrique dont la direction doit être mesurée, à combiner les signaux issus de deux des

6

antennes du réseau distantes de d et formant une base interférométrique pour une phase de la mesure de direction dans un coupleur hybride à quadrature, et à relier alternativement les sorties du coupleur à l'entrée d'une première, voie de réception durant les deux demi-périodes de périodes successives du commutation, pour créer un premier signal modulé en amplitude dont l'indice de modulation est fonction de la direction de l'émission radioélectrique, caractérisé en ce que, pour obtenir une mesure de direction indépendante des paramètres de réglage de la première voie de réception et du signal reçu lui-même, une seconde voie de réception est reliée alternativement à la sortie du coupleur non reliée à la première voie de réception pour créer un second signal modulé en amplitude, et en ce qu'une valeur d'erreur G fonction du déphasage $\Delta\varphi = \frac{2\pi d}{\lambda}$ sin α, où λ est la longueur d'onde d'émission et α l'angle d'émission repéré par rapport à la normale à la base, est calculée à chaque période de commutation à partir des valeurs d'énergie mesurées durant chaque demi-période dans chacune des voies de réception.

2. Procédé selon la revendication 1, caractérisé en ce qu'une stratégie d'asservissement est mise en oeuvre par l'introduction de retards variables $\tau_A$ et $\tau_B$ commandés par la valeur d'erreur G et appliqués aux signaux issus des antennes de la base avant leur combinaison dans le coupleur, la mesure de la direction de l'émission étant obtenue directement à partir des retards introduits pour annuler la valeur d'erreur calculée qui s'annule en même temps qu'un paramètre $\psi = \Delta\varphi - \omega(\tau_A - \tau_B)$, où ω est la pulsation de l'émission radio.

3. Procédé selon la revendication 2, caractérisé en ce que, les valeurs d'énergie mesurées durant les deux demi-périodes dans la première voie de réception étant $E_1$ et $E'_1$, correspondant respectivement aux signaux issus des première et seconde sorties du coupleur hybride, et les valeurs d'énergie mesurées durant les mêmes demi-périodes dans la seconde voie de réception étant $E_2$ et $E'_2$ correspondant respectivement aux signaux issus des seconde et première sorties du coupleur hybride, la valeur d'erreur calculée est

$$G = \frac{E'_1 E_2 - E_1 E'_2}{MAX(E'_1 E_2, E_1 E'_2)}$$

où MAX $(E'_1 E_2, E_1 E'_2)$ est le plus grand des deux produits $E'_1 E_2$ et $E_1 E'_2$, la direction de l'émission étant obtenue à partir de cette valeur d'erreur G indépendante des caractéristiques du signal reçu et des réglages des voies de réception et liée au paramètre ψ par la relation

$$G = \frac{2\sin\psi}{1 + |\sin\psi|}$$

4. Procédé selon la revendication 3, caractérisé en ce que, pour annuler la valeur d'erreur G, ladite phase de mesure comporte les étapes suivantes d'une stratégie de convergence: une premiere étape correspondant à une première periode de commutation durant laquelle une première valeur d'erreur $G_I$ est calculée, puis une deuxième étape correspondant à une deuxième période de commutation durant laquelle, après introduction d'un décalage de phase supplémentaire égal à $\frac{\pi}{2}$ entre les signaux issus des lignes à retard, une deuxième valeur d'erreur $G_{II}$ est calculée, puis une troisième étape correspondant à une troisième période de commutation durant laquelle, après introduction d'un déphasage égal au paramètre ψ calculé à partir des valeurs d'erreurs $G_I$ et $G_{II}$, une troisième valeur d'erreur $G_{III}$ est calculée, $G_{III}$ étant proche de zéro, une étape finale de convergence courte durant laquelle l'annulation précise de la valeur d'erreur et donc la mesure précise de la direction d'émission sont obtenues.

5. Procédé selon l'une quelconque des revendications précédentes, caractérisé en ce que la mesure de direction est faite en plusieurs phases, chacune d'elle utilisant une base interférométrique formée de deux antennes du réseau.

6. Radiogoniomètre pour la mise en oeuvre du procédé selon la revendication 1, comportant un réseau d'antennes $(A_i)$ et un commutateur de sélection d'antennes (10), connecté par ses entrées à deux antennes parmi les antennes du réseau pour former une base de mesure interférométrique, et dont les sorties sont couplées aux entrées d'un coupleur hybride à quadrature (13), caractérisé en ce que les sorties du coupleur sont respectivement commutées en alternance à un rythme fixe aux entrées d'un premier et d'un second récepteurs (15 et 16) par l'intermédiaire d'un commutateur (14), les sorties des récepteurs étant reliées à un circuit de mesure et de gestion (20) qui fournit, à partir des signaux issus des récepteurs (15 et 16) modulés en amplitude par la commutation alternative de leurs entrées respectives aux deux sorties du coupleur hybride, une mesure de la direction d'émission détectée.

7. Radiogoniomètre selon la revendication 6, caractérisé en ce qu'il comporte entre les sorties du commutateur de sélection (10) et les entrées du coupleur (13) deux lignes à retard variable dont les entrées de commande circuit de sont reliées au mesure et de gestion (20).

**Patentansprüche**

1. Verfahren zur interferometrischen Funkpeilung, das darin besteht, die Funkstrahlung, deren Richtung gemessen werden soll, mit den Antennen eines Antennensystems zu empfangen; die Signale, welche von zwei Antennen des Systems mit Abstand d, die eine interferometrische Basis für eine Phase der Richtungsmessung bilden, abgegeben werden, in einem Quadratur-Hybridkoppler zu kombinieren, und die Kopplerausgänge abwechselnd mit dem Eingang eines ersten Empfangskanals während der beiden Halbperioden aufeinanderfolgender Umschaltperioden zu verbinden, um ein erstes amplitudenmoduliertes Signal zu erzeugen, dessen Modulationsindex eine Funktion der Funkrichtung ist, dadurch gekennzeichnet, daß zur Erzielung einer von Regelparametern des ersten Empfangskanals und vom empfangenen Signal selbst unabhängigen Richtungsmessung ein zweiter Empfangskanal abwechselnd an den nicht mit dem ersten Empfangskanal verbundenen Ausgang des Kopplers geschaltet wird, um ein zweites amplitudenmoduliertes Signal zu erzeugen, und daß ein Fehlerwert G als Funktion der Phasenverschiebung $\Delta\varphi = (\frac{2\pi d}{\lambda}) \sin \alpha$ in jeder Umschaltperiode aus den Energiewerten berechnet wird, die während jeder Halbperiode in jedem Empfangskanal gemessen werden, wobei $\lambda$ die Ausstrahlungswellenlänge und $\alpha$ der in Bezug zur Normalen auf der Basis erfaßte Ausstrahlungswinkel ist.

2. Verfahren nach Anspruch 1, dadurch gekennzeichnet, daß eine Nachregelungsstrategie durch die Einführung variabler Verzögerungen $\tau_A$ und $\tau_B$ verfolgt wird, die durch den Fehlerwert G gesteuert und auf die von den Antennen der Basis vor ihrer Kombination im Koppler ausgegebenen Signale angewandt werden, wobei die Messung der Ausstrahlungsrichtung direkt aus den zur Annullierung der berechneten Fehlerwerte eingeführten Verzögerungen erhalten wird, wobei der Fehlerwert zur gleichen Zeit verschwindet wie ein Parameter $\psi = \Delta\varphi - \omega (\tau_A - \tau_B)$, worin $\omega$ die Kreisfrequenz der Funkstrahlung ist.

3. Verfahren nach Anspruch 2, dadurch gekennzeichnet, daß der berechnete Fehlerwert sich folgendermaßen ergibt:

$$G = \frac{E'_1 E_2 - E_1 E'_2}{MAX (E'_1 E_2, E_1 E'_2)}$$

wobei die während der beiden Halbperioden im ersten Empfangskanal gemessenen Energiewerte $E_1$ und $E'_1$ sind und den vom ersten bzw. zweiten Ausgang des Hybridkopplers gelieferten Signalen entsprechen, und die während der gleichen Halbperioden im zweiten Empfangskanal gemessenen Energiewerte $E_2$ und $E'_2$ sind und jeweils den von zweiten und ersten Ausgängen des Hybridkopplers gelieferten Signalen entsprechen, wobei MAX ($E'_1 E_2$, $E_1 E'_2$) das größere der beiden Produkte $E'_1 . E_2$ und $E_1 . E'_2$ ist und die Peilrichtung aus diesem Fehlerwert G gewonnen wird, der von den Merkmalen des empfangenen Signals und den Regelungen der Empfangskanäle unabhängig und mit dem Parameter $\psi$ durch die Beziehung:

$$G = \frac{2 \sin \psi}{1 + |\sin \psi|}$$

verknüpft ist.

4. Verfahren nach Anspruch 3, dadurch gekennzeichnet, daß zur Annullierung des Fehlerwerts G die Meßphase die folgenden Schritte einer Konvergenzstrategie aufweist: einen ersten Schritt, der einer ersten Schaltperiode entspricht, während der ein erster Fehlerwert $G_I$ berechnet wird, sodann einen zweiten Schritt, der einer zweiten Schaltperiode entspricht, während der nach Herbeiführung einer zusätzlichen Phasenverschiebung um $\frac{\pi}{2}$ zwischen den von Verzögerungsleitungen abgegebenen Signalen ein zweiter Fehlerwert $G_{II}$ berechnet wird, danach einen dritten Schritt, der einer dritten Schaltperiode entspricht, während der nach Herbeiführung einer Phasenverschiebung um den Wert $\psi$, errechnet aus den Fehlerwerten $G_I$ und $G_{II}$, ein dritter Fehlerwert $G_{III}$ berechnet wird, wobei $G_{III}$ nahe bei Null liegt, und schließlich einen letzten kurzen Konvergenzschritt, während dem die exakte Annullierung des Fehlerwertes und somit die exakte Messung der Peilrichtung erhalten werden.

5. Verfahren nach einem der vorhergehenden Ansprüche, dadurch gekennzeichnet, daß die Richtungsmessung in mehreren Phasen erfolgt, wobei in jeder eine interferometrische Basis aus zwei Antennen des Netzes benutzt wird.

6. Funkpeiler zur Durchführung des Verfahrens nach Anspruch 1, der ein Netz von Antennen ($A_i$) und einen Antennenauswahlschalter (10) aufweist, der mit seinen Eingängen an zwei Antennen des Antennennetzes zur Bildung einer interferometrischen Basis angeschlossen ist und dessen Ausgänge mit den Eingängen eines Quadratur-Hybridkopplers (13) verbunden sind, dadurch gekennzeichnet, daß die Ausgänge des Kopplers über einen Umschalter (14) abwechselnd in einem festen Rhythmus an die Eingänge eines ersten bzw. eines zweiten Empfängers (15 und 16) geschaltet werden, wobei die Ausgänge der Empfänger an einen Meß- und Abwicklungskreis (20) angeschlossen sind, der aus den von den Empfängern (15 und 16) gelieferten, durch die abwechselnde Anschaltung ihrer entsprechenden Eingänge an die beiden Ausgänge des Hybridkopplers amplitudenmodulierten Signalen eine Meßangabe der ermittelten Peilrichtung liefert.

7. Funkpeiler nach Anspruch 6, dadurch gekennzeichnet, daß er zwischen den Ausgängen der Auswahlschalter (10) und den Eingängen des Kopplers (13) zwei variable Verzögerungsleitungen aufweist, deren Steuereingänge an den Meß- und Abwicklungskreis (20) angeschlossen sind.

## Claims

1. An interferometric direction finding method consisting in receiving, by the antennae of an antenna array, the radio transmission whose direction is to be measured, in combining in a hybrid quadrature coupler the signals issued by two of the antennae of the array, which are spaced at a distance d and arranged to form an interferometric base for a phase of the direction measurement, and in connecting alternately the outputs of the coupler to the input of a first receive channel during the two half-periods of the successive switching periods in order to generate a first amplitude modulated signal, whose modulation index is a function of the direction of radio transmission, characterized in that, in order to obtain a measurement of the direction independent of the adjustment parameters of the first receive channel and of the received signal itself, a second receive channel is connected alternately to that output of the coupler which is not connected to the first receive channel, in order to generate a second amplitude modulated signal, and that an error value G depending on the phase shift $\Delta\varphi = (\frac{2\pi d}{\lambda}) \sin \alpha$ is computed at each switching period using the energy values measured during each half-period within each of the receive channels, with $\lambda$ being the transmission wavelength and $\alpha$ the detected transmission angle related to the orthogonal direction of said base.

2. A method according to claim 1, characterized in that an approach strategy is implemented by way of introduction of delay variables $\tau_A$ and $\tau_B$ controlled by the error value G and applied to the signals issued by the base antennae prior to their combination within the coupler, the measurement of the transmission direction being obtained directly in using the delays introduced for nullifying the computed error value, which disappears simultaneously with a parameter $\psi = \Delta\varphi - \omega (\tau_A - \tau_B)$, wherein $\omega$ is the angular frequency of the radio transmission.

3. A method according to claim 2, characterized in that, the energy values measured during the two half periods in the first receive channel being $E_1$ and $E'_1$, corresponding respectively to the signals issued by the first and second outputs of the hybrid coupler, and the energy values measured during the same half-periods in the second receive channel being $E_2$ and $E'_2$, corresponding respectively to the signals issued by the second and first outputs of the hybrid coupler, the error value computed is:

$$G = \frac{E'_1 E_2 - E_1 E'_2}{MAX (E'_1 E_2, E_1 E'_2)}$$

wherein MAX $(E'_1 E_2, E_1 E'_2)$ is the largest of the two products $E'_1.E_2$ and $E_1.E'_2$, the transmission direction being obtained from this error value G, which is independent of the characteristics of the received signal and of the adjustments of the receive channels, and which is linked to the parameter $\psi$ via the relation

$$G = \frac{2 \sin \psi}{1 + |\sin \psi|}$$

4. A method according to claim 3, characterized in that in order to nullify the error value G, said measurement phase comprises the following steps of a convergence strategy: a first step corresponding to a first switching period, during which a first error value $G_I$ is computed, followed by a second step corresponding to a second switching period, during which, subsequent to the introduction of a supplementary phase shift of $\frac{\pi}{2}$ between the signals issued by the delay lines, a second error value $G_{II}$ is computed, thereafter a third step corresponding to a third switching period, during which, subsequent to the introduction of a phase shift equal to the parameter $\psi$ computed from the error values $G_I$ and $G_{II}$ a third error value $G_{III}$ is computed with $G_{III}$ being near to zero, and a short final convergence phase, during which the exact nullification of the error value and thus the precise measurement of the transmission direction are obtained.

5. A method according to any one of the preceding claims, characterized in that the measurement of the direction is carried out in several phases, each of which using the interferometric base formed by two antennae of the array.

6. A radio direction finder for implementing the method according to claim 1, comprising an array of antennae $(A_i)$ and an antenna selection switch (10), the inputs of which are connected to two antennae among the antennae of the array in order to form an interferometric measurement base, and the outputs of which are connected to the inputs of a hybride quadrature coupler (13), characterized in that the outputs of the coupler are respectively switched alternately at a fixed rythm onto the inputs of a first and a second receiver (15 and 16) via a switch (14), the outputs of the receivers being connected to a measurement and handling circuit (20), which processes the signals issued by the receivers (15 and 16) and amplitude modulated by the alternative switchings of their respective inputs onto the outputs of the hybrid coupler, and delivers a measurement value of the detected transmission direction.

7. A radio direction finder according to claim 6, characterized in that it includes two variable delay lines inserted between the outputs of the selection switch (10) and the inputs of the coupler (13), the control inputs of the variable delay lines being connected to the measurement and handling circuit (20).

## FIG_1

COMMUTATEUR D'ANTENNES — 10

11 — LIGNE A RETARD, $\tau_A$

LIGNE A RETARD, $\tau_B$ — 12

$S_A$

$S_B$

13 — COUPLEUR HYBRIDE A QUADRATURE

$S_C$

$S_D$

$H_C$

COMMUTATEUR — 14

15

16

RECEPTEUR

RECEPTEUR

$S_1(t)$

$S_2(t)$

CIRCUIT DE GESTION

20

$\alpha$

$A_i$
$(i = 1 \text{ à } k)$

$\alpha$

## FIG_2

$$G = \frac{2 \sin \Psi}{1 + |\sin \Psi|}$$

$G$

$C(-\pi, 0)$

$A(0,0)$

$\Psi_1$

$\Psi_2$

$B(\pi, 0)$

$\Psi$

FIG_3

$$G' = \frac{2\,Sin\,\Psi}{1-|Sin\,\Psi|}$$

FIG_4

FIG_5

EMISSION

FIG_6